# EUROPEAN PATENT SPECIFICATION

(11) **EP 1 801 723 B1**
(45) Date of publication and mention of the grant of the patent: **15.07.2015**
(21) Application number: 06076983.3
(22) Date of filing: 07.11.2006
(51) Int. Cl.: G06F 21/00, G07F 7/08, G07F 19/00

(54) **Device for verifying an identification code**
Vorrichtung zur Überprüfung eines Identifikationscodes
Dispositif pour vérifier un code d'identification

(30) Priority: 14.11.2005 NL 1030421
(43) Date of publication of application: 27.06.2007
(73) Proprietor: Tokheim Netherlands B.V., 5531 AD Bladel (NL)
(72) Inventor: Heesters, Franciscus M.C., 5541 EX Reusel (NL); de Leeuw, Marinus J., 5561 AH Riethoven (NL); van de Boogaert, Henricus M., 5527 HM Hapert (NL)
(74) Representative: Algemeen Octrooi- en Merkenbureau B.V.

(56) References cited:
- EP-A- 1 160 647
- WO-A-00/57262
- WO-A1-98/27518
- DE-A1- 19 959 459
- DE-U1- 29 604 598
- US-A- 5 970 146
- US-A1- 2004 129 772
- US-B1- 6 279 825

## Description

The present invention relates to a device for verifying an identification code, comprising a card insertion unit for inserting an identification card therein and reading identification data from the identification card, as well as a touch sensitive screen for receiving the identification code. The invention further relates to a point-of-sale terminal as well as to an automaton for dispensing papers of value comprising a device as described above.

Such automatons are known, they are frequently used in a large variety of applications. Point-of-sale terminals comprising such a device are for example frequently used for delivering and paying for goods and services without the intermediary of assisting staff members. Think in this connection of unmanned petrol stations, unmanned check-in counters at airports, cash dispensers, and the like.

With such devices, a user inserts an identification card (such as a bank card or a similar smart card or chip card), for example, and follows the instructions that appear on the screen. Said instructions inter alia comprise the instruction to enter a personal identification number (PIN), to which end the device displays a keypad on the screen, via which the user can enter his or her PIN code.

It will be apparent that such devices require a high degree of protection against sabotage and break-in of the device in order to be able to protect the personal data of users of such devices as well as the dispensing of the aforesaid services and goods in exchange for payments that may or may not have been made. Consequently, legal requirements are made of the configuration of such devices, which requirements are intended to protect the device against bad influences from outside. It should be understood that in particular the entry of the PIN code by the user needs to be protected for the sake of the safety of the user himself and for protecting his possessions. To that end the prior art generally uses automatons that comprise a screen, on which instructions are given, as well as a keypad that is physically separated therefrom for entering the PIN code. The advantage of using a physically separated keypad is that such a keypad can be protected against sabotage attempts from outside much more easily. An example of a point of sale terminal comprising a screen and a physically separated keypad which is protected against sabotage attempts from outside is described in EP1160647. A drawback of automatons that comprise a touch sensitive screen as well as a keypad for entering a PIN code is that the user must enter part of the information on the screen, whilst other information (in particular the PIN code) must be entered via the keypad. This causes confusion with the user. In addition, it will be understood that the automaton as a whole will be larger if a keypad as well as a screen must be provided. Since the complexity of the security measures to be carried out is inversely proportional to the size of the automaton, it will be apparent that the use of a touch sensitive screen as well as a physical keypad has its drawbacks.

In addition to the aforesaid automatons comprising a touch sensitive screen as well as a physical keypad, there are currently automatons that only have a touch sensitive screen, on which the user of the automaton must enter the PIN code in response to instructions given by the automaton. As already said before, the input signals received by the screen must be adequately protected against attempts by third parties to discover the content of said signals. To that end the screen is generally configured with an encoding circuit, which encodes the input signals from the screen before transmitting them to a control unit in the device via a hardwire connection. The hardwire connections of the screen are in that case led into a housing of the device, in which the control unit is present. The housing is generally configured with means that detect damage or sabotage of the device, so that it is extremely difficult if not altogether impossible for third parties to gain access to the electronics in the housing of the automaton. In order to obtain an efficient heat dissipation and compact dimensions of the housing, the screen is generally disposed outside the housing, so that the encoding circuit for encoding the signals from the screen must be integrated in the screen. Those skilled in the art will realise that no signal-carrying conductors over which encoded signals are carried must be present outside the protective housing. Integrating the circuit in the screen is a suitable method, and the electronics of the screen itself must in turn be protected against attempted break-ins or sabotage. The latter is usually achieved by embedding the electronics in epoxy resin, for example, so as to render it impossible to place different elements of the encoding circuit into contact with each other.

A drawback, however, is the fact that the use of epoxy resin cannot altogether prevent sabotage of the device. Furthermore, the encoding of signals from the screen contributes to the overall complexity of such a device.

Consequently it is an object of the present invention to provide a device for verifying an identification code which obviates the drawbacks of the prior art and which is as compact as possible.

The above and further objectives are accomplished by the invention in that it provides a device for verifying an identification code, comprising a card insertion unit for inserting an identification card therein and reading identification data from the identification card, a touch sensitive screen for receiving the identification code, wherein the screen is provided with first detection means for detecting damage to the screen and wherein the screen comprises connecting means for receiving and sending signals, further comprising a housing for accommodating the card insertion unit therein, said housing being provided with second detection means for detecting damage to the housing, wherein the housing comprises an opening for receiving a part of the screen comprising the connection means, and wherein the screen is positioned in said opening such that said screen extends outside said housing, and that the connecting means are located within the housing and said opening is closed by said screen.

The screen is provided with first detection means, which directly register damage to the screen. The housing is also provided with second detection means, as well as with an opening for receiving a part of the screen. Positioning the screen in the opening in such a manner that the connecting means of the screen are located within the housing achieves that the connecting means of the screen cannot be accessed from outside, so that the encoding step for encoding signals from the screen, which encoding step needs to be used in prior art devices, can be left out in the device according to the invention. After all, the connecting means of the screen cannot be accessed from outside, and damage to the housing will be directly registered, in which case appropriate measures can be taken.

In order to be able to accommodate the connecting means of the screen in the housing, the housing must comprise an opening in which the screen can at least partially be accommodated. Such an opening may be considered to be a weak spot in the protection of the device. However, since the screen is provided with first detection means for detecting damage to the screen, and since the screen is placed in the opening in such a manner that it closes the opening entirely, the interior of the housing (in particular the electronics and the connecting means present therein) cannot be accessed from outside. If an attempt is nevertheless made to enter the housing via the opening for the screen, this will inevitably lead to damage to the screen, as a result of which the first detection means will be directly activated and appropriate measures can be taken. Those skilled in the art will appreciate that the screen must be placed in the housing in such a manner that it cannot be easily removed from the opening, and the screen may even be mounted in such a manner that removal of the screen will activate a further detection circuit.

The opening formed in the housing for receiving the screen not only forms a physical opening in the housing as described above, but it may also form an electromagnetic leak, and signals being transferred by the electronics accommodated in the housing may be registered from outside. The inventor has realised, however, that the use of such touch sensitive screens causes interference of the electromagnetic field to such an extent that there is no question of an electromagnetic leak. The provision of an opening in the housing and the closing of the opening with the screen in this manner, with the screen being provided with detection means for detecting damage thereto, can thus be used advantageously for the overall reduction of the complexity of the device and for providing a more compact device as such. A rule of thumb with devices of this kind is that the compactness thereof contributes to the overall security of the device itself.

According to one embodiment of the invention, the first detection means comprise a detection layer. The detection layer may have been applied to a screen, for example, and the material from which the detection layer is made may have been selected so that the electrical properties of the detection layer will change in case of damage to the detection layer. The advantage of the above embodiment is that if the screen is provided with a detection layer, the entire screen can be protected against damage. At no point on the screen can it be attempted in that case to make an opening in the screen for the purpose of sabotaging it.

By selecting the material of which the detection layer is made such that the electrical properties of the detection layer will change in case of damage being caused thereto, damage to the detection layer can be detected by means of simple detection circuits. When damage to the detection layer is detected, appropriate measures can be taken, as will be described in more detail hereinafter.

Materials that are particularly suitable for forming such a detection layer have been selected from a group comprising conductive coatings, such as Indium Tin Oxide (ITO) coatings, nickel-containing paint, copper-containing paint or silver-containing paint.

According to another example, the second detection means comprise at least one detection surface whose electrical properties will change in case of damage to said at least one detection surface. Think in this connection of a detection foil or a detection plate. The detection surface may in particular comprise a wire pattern of electrically conductive wires. Think in this connection of a (for example fine-meshed) grid structure, in which damage or perforation of the detection surface causes damage to the wires, which can be detected by a detection circuit. Appropriate measures can then be taken, such as generating an alarm.

According to one example, the detection surface consists of two supporting layers, between which the wire pattern is present. The wire pattern may for example be embedded as an intermediate layer in a printed circuit board (PCB) intended for that purpose.

By providing the housing with such detection surfaces on all sides, persons acting with malicious intent can be effectively prevented from opening the housing. When the housing is opened, for example by sawing, drilling or other method, the wire pattern will be damaged and an alarm will be generated.

The wires of the wire patterns of the various detection surfaces provided on the housing may be interconnected, so that the entire housing can be monitored by means of a single detection circuit. Those skilled in the art will appreciate that when different plates are interconnected, there is a potential risk that a person acting with malicious intent will bridge the wires relative to each other by means of a conductive glue or paste, so that there is a possibility that breakage of one of the wires of the grid will not be registered by the detection circuit. The interconnections between wire patterns of different detection surfaces form a weak spot in the housing, therefore. This weak spot can be eliminated by placing the connections of the wires of the wire pattern of the at least one detection surface between two potential media, which potential media are maintained at mutually different electrical potentials in use so as to make the application of a conductive substance over one or more connections detectable in use. When the conductive substance is applied, the potential difference between the potential media will disappear and a detection circuit will register the attempted break-in. Appropriate measures can then be taken again. The aforesaid potential media may consist of potential plates, for example, but it is also possible to use other potential media, such as a wires and other media forms.

Those skilled in the art will appreciate that the use of potential media is possible with every connection of at least one of the wires of a wire pattern of said at least one detection surface that needs to be protected against the use of conductive substances.

According to another example, the screen comprises switching means for driving the screen. The screen may in that case be placed in the housing in such a manner that the switching means are located in the housing. This is possible because the screen is positioned in the opening of the housing, so that part of the screen can extend some distance into the housing. By connecting switching means to the screen at the location where the screen extends into the housing, it becomes possible to accommodate the switching means in the housing. Those skilled in the art will appreciate that this provides major advantages as regards the required protection of signals being transferred by the screen to, for example, a control unit present in the housing. If the switching means should be present outside the housing, it will be necessary to encrypt the signals delivered by the screen in such a manner that they cannot be tapped by persons acting with malicious intent. By placing the switching means in the housing, to which a person acting with malicious intent cannot easily gain access, if at all, it is no longer necessary to encrypt the signals from the screen, so that the circuit for transferring signals to a control unit that may be provided may be of comparatively simple design. As those skilled in the art will appreciate, this is advantageous as far as the dimensions of the device and the production thereof are concerned.

According to another example, the device also comprises control means for controlling the device. The control means may for example be arranged for verifying the correctness of the identification code on the basis of the identification data. Both the card insertion unit and the screen are connected to the control means, which also comprise input gates, for example for receiving an alarm signal from detection circuits that protect the device against sabotage.

In another preferred example of the device, the housing comprises a card insertion opening for enabling the insertion of a card into the card insertion unit. The housing has such a three-dimensional shape near the card insertion opening that alignment of apparatuses with the card insertion opening can be effectively prevented. By selecting such a three-dimensional shape of the housing near the card insertion opening, for example a substantially round, outwardly extending (seen from the housing) shape, a person acting with malicious intent is prevented from placing an apparatus for sabotaging the device into abutment with the device.

According to another example of the device as described above, the device comprises at least one security circuit, which is arranged for switching the device to a safe mode in response to damage or sabotage of the screen or the housing. In one embodiment thereof, the security circuit is connected to the first detection means, for example, or to the second detection means. The security circuit may furthermore be connected to the at least two potential media for detecting the application of a conductive substance as described above.

The safe mode may for example be selected from a group comprising: turning off the device, producing an alarm signal (this may either be an audible, loud signal or a silent alarm to a central alarm exchange), erasing a memory present in the device (by which encryption codes in the device are erased, thereby making it impossible to decode the signals used in the device), or changing the data used in the device, for example, in support of investigation methods. In the latter case, special codes may be passed on to the person acting with malicious intent, which codes can be traced by an investigator when they are used by the person acting with malicious intent. In this way it becomes possible to trace the person acting with malicious intent after the device has been sabotaged, whilst the information obtained by the person acting with malicious intent will be useless to the person in question.

According to another aspect of the invention, a point-of-sale terminal comprising a device as described above is provided. According to yet another aspect of the invention, an automaton for dispensing papers of value, such as a cash dispenser, may be provided. Instead of an automatic cash dispenser, also an dispensing machine for vouchers, admission tickets, travel documents, personal identification papers and other papers of value may be considered.

The invention will be described hereinafter on the basis of a few non-limitative embodiment thereof, referring to the appended drawings, in which:
Figure 1 shows a point-of-sale terminal comprising a device according to the invention;
Figure 2 shows a housing for a device according to the present invention;
Figure 3 shows a touch sensitive screen for a device according to the invention;
Figure 4 shows a cutaway side view of the point-of-sale terminal of figure 1; and
Figure 5 schematically shows two detection plates for use in a housing according to the present invention.

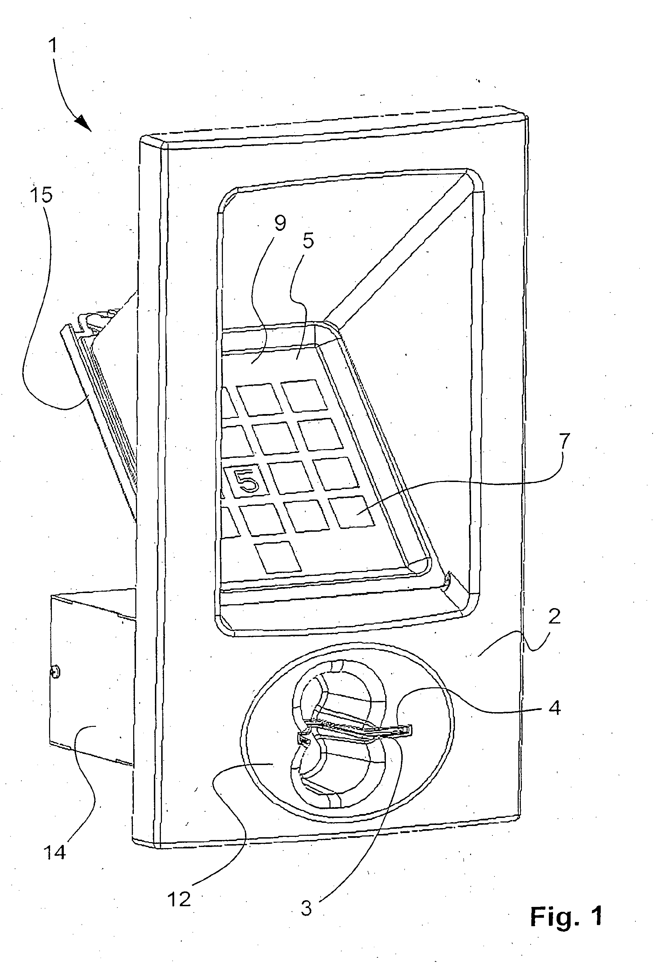

Figure 1 shows a point-of-sale terminal 1 in which a device according to the invention for verifying an identification code is incorporated. The point-of-sale terminal consists of a front panel 2 with a card insertion opening 3 for a cardholder 4, for inserting an identification card. The point-of-sale terminal 1 also comprises a touch sensitive screen 5, on which, in the condition that is shown in figure 1, a keypad consisting of a multitude of keys 7 is displayed. A user can enter an identification code into the point-of-sale terminal by touching the keys on the touch sensitive screen 5. The point-of-sale terminal 1 will verify the identification code that has been entered and compare it inter alia with the information present on an inserted identification card.

A point-of-sale terminal 1 as shown in figure 1 is usually built into a wall, such as a wall of a petrol station, or mounted in another manner, such that the rear side of the point-of-sale terminal is hidden from the user's view. A housing 14 is placed at the rear side of the front panel 2, in which housing the operative parts of the point-of-sale terminal will for the larger part be present. The housing 14 also comprises a backplate 15 for the screen 5 that functions protect the screen, for example against mechanical damage.

The touch sensitive screen 5 comprises a detection layer 9, by means of which damage to the screen can be detected in a suitable manner. The detection layer 9 may for example consist of a coating of indium tin oxide (ITO), whose electrical properties can be monitored. In the case of breakage of the touch sensitive screen 5, for example as a result of a non-authorised person attempting to perforated the touch sensitive screen 5, a change in the electrical properties of the coating can be detected by the point-of-sale terminal 1, which point-of-sale terminal 1 can subsequently take appropriate measures. Said measures may for example comprise the disabling of the point-of-sale terminal and, if desired, the erasing of the confidential information stored therein, such as encryption data for encrypting information.

The front panel 2 may be substantially flat, but near the card insertion opening 3 the front panel comprises an area 12 having a three-dimensional shape such that alignment of apparatuses with the card insertion opening will be difficult. Thus, the area 12 may be slightly round, for example, and extend outwards with respect to the point-of-sale terminal 1, so that it will be difficult to place an apparatus for sabotaging the point-of-sale terminal against the front panel 2 thereof in such a manner that it is aligned with the card insertion unit in the point-of-sale terminal. Such a measure has been taken in order to discourage and prevent sabotage of the point-of-sale terminal.

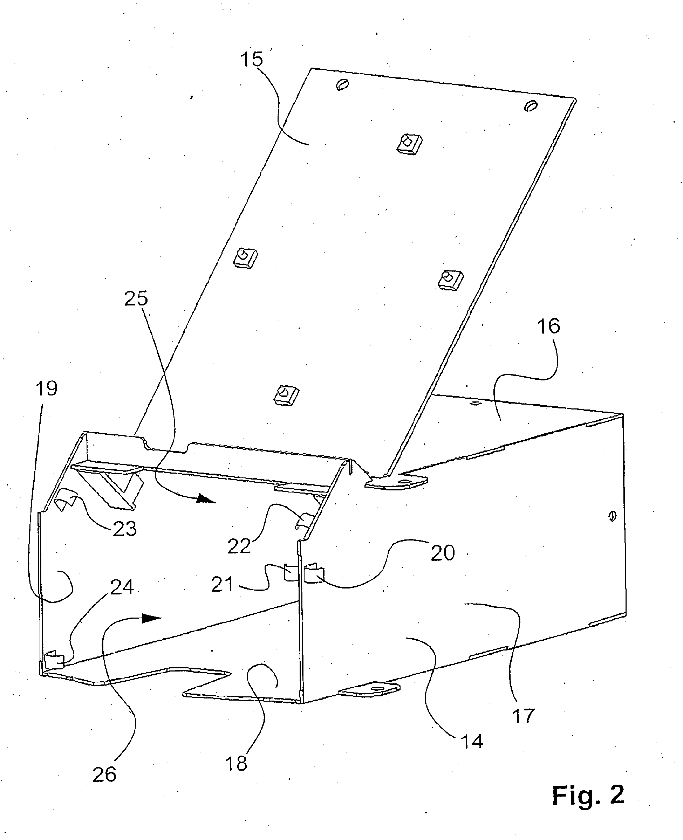

Figure 2 shows the housing 14 of the point-of-sale terminal 1 of figure 1. The housing 14 consists of or comprises a multitude of detection plates 16, 17, 18 and 19, which are arranged for detecting damage to the housing, in particular breakage or perforation of the plates 16, 17, 18, 19. In the present case, the plates 16, 17, 18, 19 are printed circuit boards (PCBs) consisting of two layers, between which a fine-meshed pattern of wires is present (not shown in figure 2). If such a plate, for example the plate 17, is perforated, one of the wires of the wire pattern will be broken, as a result of which a circuit is broken, for example, which can be detected by means of a security circuit.

Figure 2 also shows the backplate 15 for the touch sensitive screen. The backplate 15 may likewise be a security plate as discussed above with reference to the plates 16, 17, 18 and 19, or merely a metal plate that supports the screen. In the latter case, such a security plate may be separately positioned between the backplate 15 and the touch sensitive screen so as to enable detection of sabotage of the touch sensitive screen.

The housing 14 that is shown in figure 2 is open at the front side 26, and it is positioned against the rear side of the front panel 2 of figure 1. The front panel 2 comprises a further detection plate (not shown) at the rear side thereof, which will close the front side 26 of the housing completely when the housing is positioned against the rear side of the front panel 2.

In the illustrated embodiment, the plates 16, 17, 18 and 19 are interconnected by means of spring contacts, which ensure that the wire patterns of each of the plates 16, 17, 18 and 19 will jointly form a single circuit. This will be explained in more detail hereinafter. The detection plate (not shown) at the rear side of the front panel 2 in figure 1 is connected to the plates 17 and 19 in a similar manner by means of spring contacts 20, 21 and 24. Furthermore, a detection plate (not shown) placed behind the touch sensitive screen may be connected to the plates 17 and 19 in this manner by means of spring contacts 22 and 23.

The detection plates 16, 17, 18 and 19 and the backplate of the housing 14 (hidden from view), together with the detection plate of the front panel 2 (not shown), form a nearly closed space. Access to said space is only possible via the opening 25.

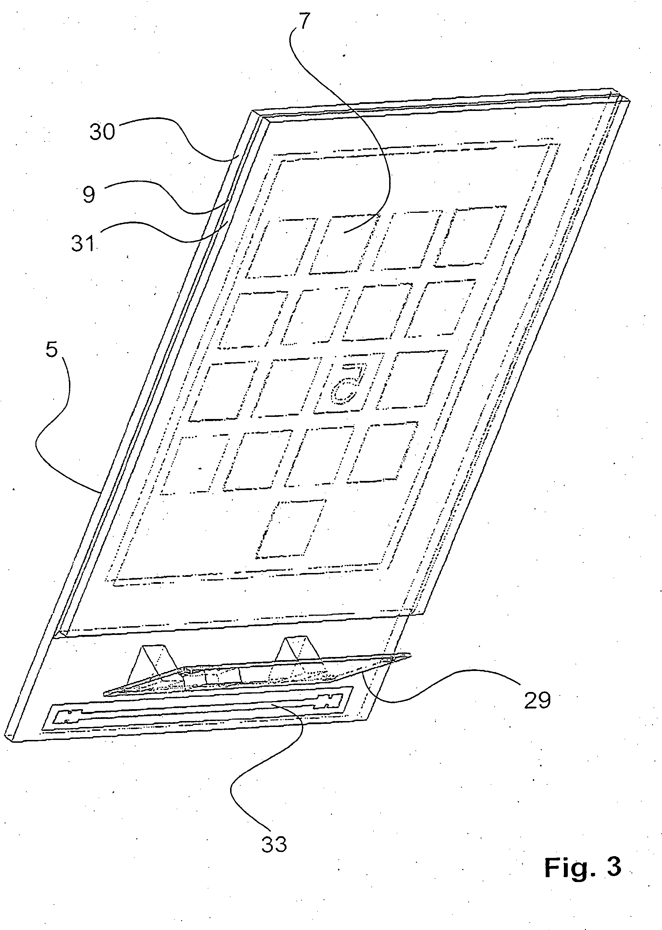

Figure 3 is a transparent view from the rear side of the touch sensitive screen 5 of figure 1. The parts of the touch sensitive screen 5 that are hidden from view, such as the keys 7 shown on the screen, are illustrated in dotted lines in figure 3.

The touch sensitive screen 5 consists of a flat screen 31, for example a liquid crystal display (LCD). Said screen is provided with the detection layer 9, by means of which damage to the screen can be detected. A glass cover plate 30 has been placed over said detection layer.

Switching means 30 for driving the screen 31 are placed at the bottom side thereof, as is shown in the figure. Furthermore present at the bottom side of the touch sensitive screen 5 is a potential surface 33, whose function will be explained in more detail hereinafter.

The touch sensitive screen 5 of figure 3 is placed on the housing 14 of figure 2 in such a manner that the switching means 29 extend into the housing 14 through the opening 25. The switching means 29 can now be directly connected to control means present in the housing, which control the operation of the point-of-sale terminal. The touch sensitive screen 5 is positioned on the housing 14 in such a manner that the opening 25 of the housing is effectively closed by the touch sensitive screen. The housing 14 is closed on all sides now, and in addition it is protected by detection layers or all sides, so that it is not possible to gain access to the interior of the point-of-sale terminal 1 from the outer side without circumnavigating the detection means consisting of the detection layer on the screen and the detection plates of the housing.

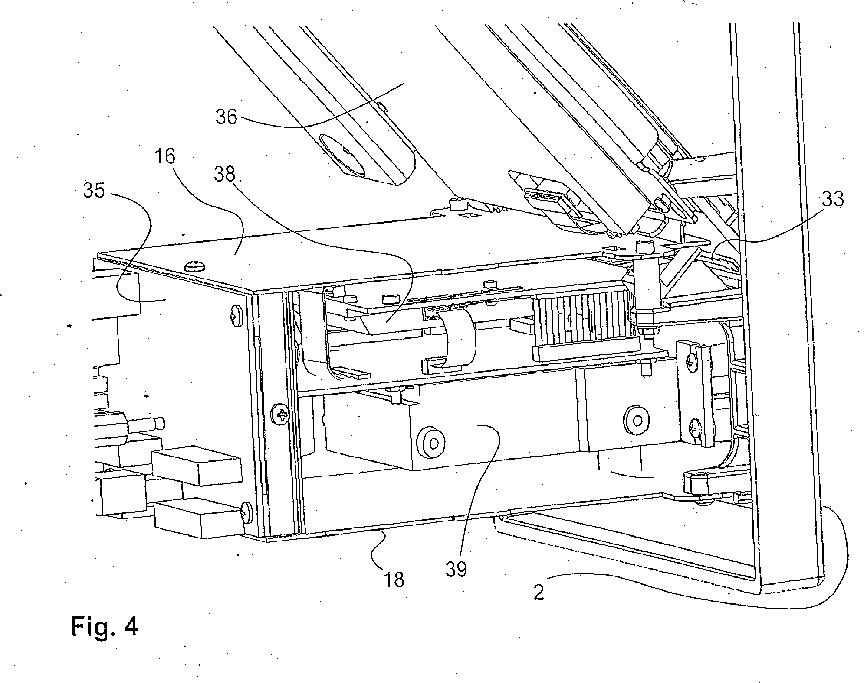

Figure 4 is a cutaway side view of a point-of-sale terminal according to the present invention. In this figure, the detection plates and 18 of the housing can be distinguished, as well as the detection plate 35 at the rear side of the housing. Present in the interior of the housing are the card reading device 39 and the control means 38. The control means 38 may comprise a security or detection circuit, for example, which monitors the detection plates 16, 17, 18, 19 and 35 connected thereto, the coating 9 of the touch sensitive screen and the detection plate (not shown) that is present at the rear side of the front panel 2.

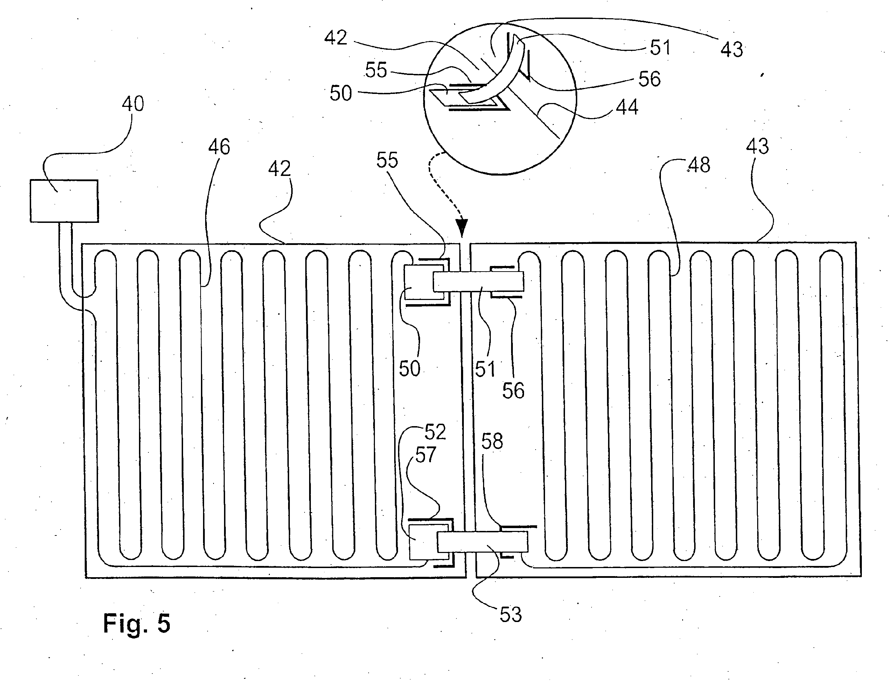

As figure 4 shows, the screen 5 is positioned on the housing 14 in such a manner that it effectively closes the opening 25 (only shown in figure 2). The switching means 29 extend into the housing and are connected (not shown) to the control means 38. Figure 4 furthermore shows the potential surface 33 that protects the screen and the switching means against a so-called "conductive glue attack", which will be explained below with reference to figure 5.

Figure 5 schematically shows two detection plates 42 and 43 similar to, for example, the detection plates 16, 17, 18, 119 and 35 in figures 1-4. The detection plates both comprise a five-meshed wire pattern 46, 48 that covers the entire area of the detection plates 42, 43. The detection plates 42 and 43 may for example consist of two or more layers, between which the fine-meshed wire pattern 46, 48 is present, so that access to the wires of the pattern is not possible without perforating the layers of the plates 42 and 43. Thus the individual wires of the wire patterns 46 and 48 cannot be easily bridged without activating the detection mechanism. The wire patterns 46 and 48 together form a circuit and are connected to the security circuit 40. The security circuit 40 may for example be arranged for monitoring the electrical resistance of the circuit at all times and take appropriate measures in case of changes (for example emitting an alarm signal, erasing data in the point-of-sale terminal, etc). The wire patterns 46 and 48 are interconnected by means of spring contacts 51 and 53. The spring contact 51, which is fixed to the plate 43, makes contact with a first end of the wire pattern 48. The spring contact 51 will touch a contact area 50 on the plate 42 if the plates 43 and 43 are correctly placed in abutment with one another. The contact area 50 is in turn connected to one of the ends of the wire pattern 46. Similarly, the other end of the wire pattern 48 is connected to the spring contact 53, and the spring contact 53 is fixed to the plate 43. If the plates 43 and 43 have been correctly placed in abutment with one another, the spring contact 53 will make electrical contact with the contact area 52 of the plate 42. The contact area 52 is connected to the other end of the wire pattern 46, so that a closed electrical circuit is formed in this way from the security circuit 40 to the wire pattern 46, via the contact area of 50 to the spring contact 51 and to the wire pattern 48, and back from the wire pattern 48 to the contact area 52 again via the spring contact 53, and from there to the wire pattern 46 and back to the security circuit 40 again.

Figure 5 is a schematic drawing. Those skilled in the art will appreciate that the open blank area between the contact areas 50 and 52 of the detection plate 42 will in actual fact be filled with wires of the wire pattern 46. The same applies to the unprotected area between the spring contacts 51 and 53 on the detection plate 43. Furthermore, the plates 42 and 43 may include an angle with each other, as is the case with the plates 17 and 18 in figure 2, for example. The manner in which the spring contact 51 makes contact with the contact area 50 in that case is shown in perspective view in the dotted circle 60. In said perspective drawing 60, the detection plates 42 and 43 are shown again, which are positioned at an angle of 90 degrees with respect to other. The angle that the plates 42 and 43 include with each other is formed by the seam 44. Without further protection, it would be relatively simple to make contact with either the contact surface 50 or the spring contact 51 from outside. This could be done, for example, by making a very small hole in the seam 44 and filling the space therebehind with a conductive paste or glue. By making contact both with the spring contact 51 and with the spring contact 53 in this manner, the circuit formed by the security circuit 40, the wire patterns 46 and 48 and the connecting elements 50, 51 and 52, 53 can be bridged from outside, so that the wire pattern 48 in the detection plate 43 could be deactivated. It would then be possible to make a hole of any size in the detection plate 43 and sabotage the point-of-sale terminal.

To prevent sabotage by means of a conductive glue or paste, the contact surfaces 50 and 52 and the spring contacts 51 and 53 on the plates 42 and 43 are surrounded by potential surfaces 55, 56, 57 and 58. The electrical potential of the potential surfaces 55, 56, 57 and 58 is different from that of the contact surfaces 50 and 52 and the spring contact 51 and 53. If the space behind the seam 44 is filled with a conductive paste, the potential surface 55 or the potential surface 56 cannot be prevented from making contact with the contract surface 50 or the spring contact 51, so that the potential on the contact surface 50 or the spring contact 51 will change. This can be detected by the security circuit 40, which can then take action in an appropriate manner. Those skilled in the art will appreciate that the illustrated potential surfaces 55, 56, 57 and 58 are merely examples, and that the potential surfaces may be moved in any desired manner with respect to the spring contacts 51 and 53 and the contact surfaces 50 and 52 so as to make it more difficult for a non-authorised person to bridge the circuit.

Potential surfaces, such as the potential surfaces 55, 56, 57 and 58, may be provided in or on the housing in any other desired manner. A similar potential surface is the potential surface 33 in figure 3, for example, which makes it impossible to gain access to the switching means 29 of the screen from outside by means of a conductive paste or glue.

## Claims

1. A device (1) for verifying an identification code, comprising
- a front panel (2)
- a card insertion unit (4) for inserting an identification card therein and reading identification data from the identification card,
- a touch sensitive screen (5) for receiving the identification code, wherein the touch sensitive screen is provided with
* a screen (31)
* first detection means (9) for detecting damage to the screen (31) and
* connecting means for receiving and sending signal,
said device further comprising
- switching means (29) for driving the screen,
- a housing (14) for accommodating the card insertion unit (4) therein, said housing being provided with a back plate (15) and second detection means comprising a multitude of detection plates (16-17-18-19) for detecting damage to the housing, said housing being positioned against the rear side of the front panel (2), which front panel (2) further comprises a detection plate,
wherein the housing (14) also comprises
- an opening (25) for receiving a part of the touch sensitive screen comprising the connecting means, and wherein said part of the touch sensitive screen (5) is positioned in said opening (25) such that said screen (31) of said touch sensitive screen (5) extends outside said housing (14), and that the connecting means are located within the housing (14) and said opening (25) is closed by said screen (31) of said touch sensitive screen (5), and wherein
- the switching means (29) are connected to the screen (31), and wherein the switching means (29) are located in the housing (14), wherein
the backplate (15) being for supporting the screen (31) of the touch sensitive screen (5),
said second detection means being arranged for detecting damage to the housing, and wherein
said multitude of detection plates, the back plate of the housing together with the detection plate of the front panel forming a nearly closed space only accessible via said opening (25).

2. A device according to claim 1, wherein the first detection means comprise a detection layer.

3. A device according to claim 2, wherein the material from which the detection layer is made has been selected such that the electrical properties of the detection layer will change in case of damage to the detection layer.

4. A device according to claim 3, wherein the detection layer comprises a material selected from a group comprising conductive coatings, such as Indium Tin Oxide (ITO) coatings, nickel-containing paint, copper-containing paint or silver-containing paint.

5. A device according to any one of the preceding claims, wherein said second detection means comprise at least one detection surface whose electrical properties will change in case of damage to said at least one detection surface.

6. A device according to claim 5, wherein the detection surface has been selected from a group comprising a detection foil or a detection plate.

7. A device according to either one of the claims 5 or 6, wherein the detection surface comprises a wire pattern of electrically conductive wires.

8. A device according to claim 7, wherein the detection surface consists of two supporting layers, between which the wire pattern is present.

9. A device according to any one of the claims 5-8, wherein said at least one detection surface abuts against the housing on all sides thereof.

10. A device according to claim 7 or 8, wherein one or more connections of the wires of the wire pattern of said at least one detection surface are present between two potential media, wherein said two potential media are maintained at mutually different. electrical potentials in use so as to make the application of a conductive substance over one or more connections detectable in use.

11. A device according to claim 10, wherein the potential media are potential plates.

12. A device according to either one of the claims 10 or 11, wherein the wire patterns of at least two detection surfaces are interconnected, and wherein at least a part of the interconnected wires of the wire patterns is located between said at least two potential media.

13. A device according to any one of the preceding claims, wherein the housing comprises a card insertion opening for enabling the insertion of a card into the card insertion unit, and wherein the housing has such a three-dimensional shape hear the card insertion opening that alignment of apparatuses with the card insertion opening can be effectively prevented.

14. A device according to claim 13, wherein the housing has a substantially round shape near the card insertion opening, which round shape of the housing extends outwards, seen from the housing.

15. A device according to any one of the preceding claims, further comprising control means for controlling the device.

16. A device according to claim 15, wherein the control means are arranged for verifying the correctness of the identification code on the basis of the identification data.

17. A device according to any one of the preceding claims, further comprising at least one security circuit, which is arranged for switching the device to a safe mode in response to damage or sabotage of the screen or the housing.

18. A device according to claim 17, wherein the security circuit is connected to the first detection means for detecting damage to the screen.

19. A device according to either one of the claims 17 or 18, wherein the security circuit is connected to the second detection means for detecting damage to the screen.

20. A device according to any one 17-19 when dependent on claim 10, of the claims wherein the security circuit is connected to said at least two potential media for detecting the application of a conductive substance between the potential media.

21. A device according to any one of the claims 17-20, wherein the safe mode is selected from a group comprising: turning off the device, producing an alarm signal, erasing a memory present in the device, changing data used in the device in support of investigation methods.

22. A point-of-sale terminal comprising a device according to any one of the preceding claims.

23. An automaton for dispensing papers of value, comprising a device according to any one of the claims 1-21.

24. An automaton according to claim 23, wherein said papers of value have been selected from a group comprising money, vouchers, admission tickets, travel documents, personal identification papers and the like papers of value.

## Patentansprüche

1. Vorrichtung (1) zur Überprüfung eines Identifizierungscodes, mit
- einer Frontplatte (2),
- einer Karteneinführungseinheit (4) zum Einführen einer Identifizierungskarte darin und zum Lesen von Identifizierungsdaten von der Identifizierungskarte,
- einem berührungsempfindlichen Bildschirm (5) zum Empfangen des Identifizierungscodes, wobei der berührungsempfindliche Bildschirm ausgestattet ist mit
• einem Bildschirm (31),
• ersten Erfassungsmitteln (9) zur Erfassung einer Beschädigung am Bildschirm (31) und
• Verbindungsmitteln zum Empfangen und Senden von Signalen, wobei die Vorrichtung ferner Folgendes aufweist:
- Schaltmittel (29) zum Antreiben des Bildschirms,
- ein Gehäuse (14) zum Aufnehmen der Karteneinführungseinheit (4) darin, wobei das Gehäuse mit einer Rückplatte (15) und zweiten Erfassungsmitteln mit einer Vielzahl von Erfassungsplatten (16-17-18-19) zur Erfassung einer Beschädigung am Gehäuse ausgestattet ist, wobei das Gehäuse gegen die Rückseite der Frontplatte (2) angeordnet ist, wobei die Frontplatte (2) ferner eine Erfassungsplatte aufweist,
wobei das Gehäuse (14) auch Folgendes aufweist:
- eine Öffnung (25) zum Aufnehmen eines Teils des berührungsempfindlichen Bildschirms, der die Verbindungsmittel aufweist, und wobei der Teil des berührungsempfindlichen Bildschirms (5) so in der Öffnung (25) angeordnet ist, dass sich der Bildschirm (31) des berührungsempfindlichen Bildschirms (5) außerhalb des Gehäuses (14) erstreckt, die Verbindungsmittel innerhalb des Gehäuses (14) liegen und die Öffnung (25) durch den Bildschirm (31) des berührungsempfindlichen Bildschirms (5) geschlossen ist, und wobei
- die Schaltmittel (29) mit dem Bildschirm (31) verbunden sind und die Schaltmittel (29) im Gehäuse (14) liegen, wobei
die Rückplatte (15) zum Stützen des Bildschirms (31) des berührungsempfindlichen Bildschirms (5) vorgesehen ist,
die zweiten Erfassungsmittel so angeordnet sind, dass sie eine Beschädigung am Gehäuse erfassen, und
die Vielzahl von Erfassungsplatten, die Rückplatte des Gehäuses zusammen mit der Erfassungsplatte der Frontplatte einen nahezu geschlossenen Raum bilden, der lediglich über die Öffnung (25) zugänglich ist.

2. Vorrichtung nach Anspruch 1, wobei die ersten Erfassungsmittel eine Erfassungsschicht aufweisen.

3. Vorrichtung nach Anspruch 2, wobei das Material, aus dem die Erfassungsschicht besteht, so ausgewählt ist, dass sich die elektrischen Eigenschaften der Erfassungsschicht im Fall einer Beschädigung an der Erfassungsschicht verändern.

4. Vorrichtung nach Anspruch 3, wobei die Erfassungsschicht ein Material umfasst, das aus einer Gruppe ausgewählt ist, die leitende Überzüge, wie etwa Indium-Zinn-Oxid-Überzüge (ITO-Überzüge), nickelhaltige Farbe, kupferhaltige Farbe oder silberhaltige Farbe umfasst.

5. Vorrichtung nach einem der vorhergehenden Ansprüche, wobei die zweiten Erfassungsmittel mindestens eine Erfassungsfläche aufweisen, deren elektrischen Eigenschaften sich im Fall einer Beschädigung an der mindestens einen Erfassungsfläche verändern.

6. Vorrichtung nach Anspruch 5, wobei die Erfassungsfläche aus einer Gruppe ausgewählt ist, die eine Erfassungsfolie oder eine Erfassungsplatte umfasst.

7. Vorrichtung nach einem der Ansprüche 5 oder 6, wobei die Erfassungsfläche ein Drahtmuster aus elektrisch leitenden Drähten aufweist.

8. Vorrichtung nach Anspruch 7, wobei die Erfassungsfläche aus zwei Stützschichten besteht, zwischen denen das Drahtmuster liegt.

9. Vorrichtung nach einem der Ansprüche 5 bis 8, wobei die mindestens eine Erfassungsfläche am Gehäuse, an all seinen Seiten anliegt.

10. Vorrichtung nach Anspruch 7 oder 8, wobei eine oder mehrere Verbindungen der Drähte des Drahtmusters der mindestens einen Erfassungsfläche zwischen zwei Potentialträgern liegen, wobei die beiden Potentialträger im Gebrauch bei zueinander unterschiedlichen elektrischen Potentialen gehalten sind, so dass das Aufbringen einer leitfähigen Substanz auf eine oder mehrere Verbindungen im Gebrauch erfassbar ist.

11. Vorrichtung nach Anspruch 10, wobei es sich bei den Potentialträgern um Potentialplatten handelt.

12. Vorrichtung nach einem der Ansprüche 10 oder 11, wobei die Drahtmuster von mindestens zwei Erfassungsflächen miteinander verbunden sind und zumindest ein Teil der miteinander verbundenen Drähte der Drahtmuster zwischen den mindestens zwei Potentialträgern liegt.

13. Vorrichtung nach einem der vorhergehenden Ansprüche, wobei das Gehäuse eine Karteneinführungsöffnung aufweist, um das Einführen einer Karte in die Karteneinführungseinheit zu ermöglichen, und das Gehäuse nahe der Karteneinführungsöffnung eine solche dreidimensionale Gestalt, dass eine fluchtende Anordnung von Geräten mit der Karteneinführungsöffnung effektiv verhindert werden kann.

14. Vorrichtung nach Anspruch 13, wobei das Gehäuse nahe der Karteneinführungsöffnung eine im Wesentlichen runde Gestalt hat, wobei sich die runde Gestalt des Gehäuses von dem Gehäuse aus gesehen nach außen erstreckt.

15. Vorrichtung nach einem der vorhergehenden Ansprüche, die ferner Steuermittel zur Steuerung der Vorrichtung aufweist.

16. Vorrichtung nach Anspruch 15, wobei die Steuermittel so angeordnet sind, dass sie die Korrektheit des Identifikationscodes auf Grundlage der Identifikationsdaten prüfen.

17. Vorrichtung nach einem der vorhergehenden Ansprüche, die ferner mindestens eine Sicherheitsschaltung aufweist, die so angeordnet ist, dass sie die Vorrichtung in Reaktion auf eine Beschädigung oder Sabotage am Bildschirm oder am Gehäuse in einen Sicherheitsmodus schaltet.

18. Vorrichtung nach Anspruch 17, wobei die Sicherheitsschaltung zur Erfassung einer Beschädigung am Bildschirm mit den ersten Erfassungsmitteln verbunden ist.

19. Vorrichtung nach einem der Ansprüche 17 oder 18, wobei die Sicherheitsschaltung zur Erfassung einer Beschädigung am Bildschirm mit den zweiten Erfassungsmitteln verbunden ist.

20. Vorrichtung nach einem der Ansprüche 17 bis 19, wenn auf Anspruch 10 rückbezogen, wobei die Sicherheitsschaltung zur Erfassung des Aufbringen einer leitenden Substanz zwischen den Potentialträgern mit den mindestens zwei Potentialträgern verbunden ist.

21. Vorrichtung nach einem der Ansprüche 17 bis 20, wobei der Sicherheitsmodus aus einer Gruppe ausgewählt ist, die Folgendes umfasst: Ausschalten der Vorrichtung, Erzeugen eines Alarmsignals, Löschen eines in der Vorrichtung vorhandenen Speichers, Ändern von Daten, die in der Vorrichtung zur Unterstützung von Untersuchungsverfahren verwendet werden.

22. Kassenterminal, mit einer Vorrichtung nach einem der vorhergehenden Ansprüche.

23. Automat zur Ausgabe von Wertdokumenten, mit einer Vorrichtung nach einem der Ansprüche 1 bis 21.

24. Automat nach Anspruch 23, wobei die Wertdokumente aus einer Gruppe ausgewählt sind, die Geld, Gutscheine, Eintrittskarten, Reisedokumente, persönliche Identifikationsdokumente und ähnliche Wertdokumente umfasst.

## Revendications

1. Dispositif (1) pour vérifier un code d'identification, comprenant :
- un panneau avant (2),
- une unité d'insertion de carte (4) pour insérer une carte d'identification dans celle-ci et lire des données d'identification à partir de la carte d'identification,
- un écran tactile (5) pour recevoir le code d'identification, dans lequel l'écran tactile est pourvu
* d'un écran (31),
* de premiers moyens de détection (9) pour détecter un endommagement de l'écran (31), et
* de moyens de connexion pour recevoir et envoyer des signaux,
ledit dispositif comprenant en outre
- des moyens de commutation (29) pour commander l'écran,
- un logement (14) pour recevoir l'unité d'insertion de carte (4) dans celui-ci, ledit logement étant pourvu d'une plaque arrière (15) et de deuxièmes moyens de détection comprenant une multitude de plaques de détection (16-17-18-19) pour détecter un endommagement du logement, ledit logement étant positionné contre le côté arrière du panneau avant (2), lequel panneau avant (2) comprend en outre une plaque de détection,
dans lequel le logement (14) comprend également
- une ouverture (25) pour recevoir une partie de l'écran tactile comprenant les moyens de connexion, et dans lequel ladite partie de l'écran tactile (5) est positionnée dans ladite ouverture (25) de sorte que ledit écran (31) dudit écran tactile (5) s'étende à l'extérieur dudit logement (14), et de sorte que les moyens de connexion soient situés dans le logement (14) et que ladite ouverture (25) soit fermée par ledit écran (31) dudit écran tactile (5), et dans lequel
- les moyens de commutation (29) sont connectés à l'écran (31), et dans lequel les moyens de commutation (29) sont situés dans le logement (14), dans lequel
la plaque arrière (15) servant à supporter l'écran (31) de l'écran tactile (5),
lesdits deuxièmes moyens de détection étant agencés pour détecter un endommagement du logement, et dans lequel
ladite multitude de plaques de détection, la plaque arrière du logement avec la plaque de détection du panneau avant formant un espace presque fermé accessible uniquement à travers ladite ouverture (25).

2. Dispositif selon la revendication 1, dans lequel les premiers moyens de détection comprennent une couche de détection.

3. Dispositif selon la revendication 2, dans lequel le matériau à partir duquel la couche de détection est réalisée a été sélectionné de sorte que les propriétés électriques de la couche de détection changent dans le cas d'un endommagement de la couche de détection.

4. Dispositif selon la revendication 3, dans lequel la couche de détection comprend un matériau sélectionné dans un groupe comprenant des revêtements conducteurs, tels que des revêtements en oxyde d'étain-indium (ITO), une peinture contenant du nickel, une peinture contenant du cuivre ou une peinture contenant de l'argent.

5. Dispositif selon l'une quelconque des revendications précédentes, dans lequel lesdits deuxièmes moyens de détection comprennent au moins une surface de détection dont les propriétés électriques changent dans le cas d'un endommagement de ladite au moins une surface de détection.

6. Dispositif selon la revendication 5, dans lequel la surface de détection a été sélectionnée dans un groupe comprenant une feuille de détection ou une plaque de détection.

7. Dispositif selon l'une ou l'autre des revendications 5 et 6, dans lequel la surface de détection comprend un motif de fils constitué de fils électriquement conducteurs.

8. Dispositif selon la revendication 7, dans lequel la surface de détection consiste en deux couches de support entre lesquelles le motif de fils est présent.

9. Dispositif selon l'une quelconque des revendications 5 à 8, dans lequel ladite au moins une surface de détection est en butée contre le logement sur tous les côtés de celui-ci.

10. Dispositif selon la revendication 7 ou 8, dans lequel une ou plusieurs connexions des fils du motif de fils de ladite au moins une surface de détection sont présentes entre deux supports de potentiel, dans lequel lesdits deux supports de potentiel sont maintenus à des potentiels électriques mutuellement différents en utilisation de manière à provoquer l'application d'une substance conductrice sur une ou plusieurs connexions détectables en utilisation.

11. Dispositif selon la revendication 10, dans lequel les supports de potentiel sont des plaques de potentiel.

12. Dispositif selon l'une ou l'autre des revendications 10 et 11, dans lequel les motifs de fils d'au moins deux surfaces de détection sont interconnectés, et dans lequel au moins une partie des fils interconnectés des motifs de fils est située entre lesdits au moins deux supports de potentiel.

13. Dispositif selon l'une quelconque des revendications précédentes, dans lequel le logement comprend une ouverture d'insertion de carte pour permettre l'insertion d'une carte dans l'unité d'insertion de carte, et dans lequel le logement a une forme tridimensionnelle à proximité de l'ouverture d'insertion de carte telle qu'un alignement d'appareils avec l'ouverture d'insertion de carte peut être évité efficacement.

14. Dispositif selon la revendication 13, dans lequel le logement a une forme sensiblement ronde à proximité de l'ouverture d'insertion de carte, laquelle forme ronde du logement s'étend vers l'extérieur, vu à partir du logement.

15. Dispositif selon l'une quelconque des revendications précédentes, comprenant en outre des moyens de commande pour commander le dispositif.

16. Dispositif selon la revendication 15, dans lequel les moyens de commande sont agencés pour vérifier l'exactitude du code d'identification sur la base des données d'identification.

17. Dispositif selon l'une quelconque des revendications précédentes, comprenant en outre au moins un circuit de sécurité, qui est agencé pour commuter le dispositif dans un mode sûr en réponse à un endommagement ou à un sabotage de l'écran ou du logement.

18. Dispositif selon la revendication 17, dans lequel le circuit de sécurité est connecté aux premiers moyens de détection pour détecter un endommagement de l'écran.

19. Dispositif selon l'une ou l'autre des revendications 17 et 18, dans lequel le circuit de sécurité est connecté aux deuxièmes moyens de détection pour détecter un endommagement de l'écran.

20. Dispositif selon l'une quelconque des revendications 17 à 19 lorsqu'elle dépend de la revendication 10, dans lequel le circuit de sécurité est connecté aux dits au moins deux supports de potentiel pour détecter l'application d'une substance conductrice entre les supports de potentiel.

21. Dispositif selon l'une quelconque des revendications 17 à 20, dans lequel le mode sûr est sélectionné dans un groupe comprenant : la désactivation du dispositif, la production d'un signal d'alarme, l'effacement d'une mémoire présente dans le dispositif, la modification des données utilisées dans le dispositif en support à des procédés d'examen.

22. Terminal de point de vente comprenant un dispositif selon l'une quelconque des revendications précédentes.

23. Automate pour distribuer des papiers de valeur, comprenant un dispositif selon l'une quelconque des revendications 1 à 21.

24. Automate selon la revendication 23, dans lequel lesdits papiers de valeur ont été sélectionnés dans un groupe comprenant de la monnaie, des justificatifs, des tickets d'admission, des documents de voyage, des papiers d'identification personnelle et des papiers de valeur similaires.
